# EUROPEAN PATENT APPLICATION

(11) **EP 4 848 423 A1**
(43) Date of publication of application: **02.12.2026**
(21) Application number: 25833524.9
(22) Date of filing: 04.07.2025
(51) Int. Cl.: H01M 50/169, H01M 50/152, H01M 50/107, H01M 50/342, H01M 50/538, H01M 10/0587, H01M 50/249, H01M 50/531

(54) **BATTERY, AND BATTERY PACK AND VEHICLE COMPRISING SAME**

(30) Priority: 04.07.2024 KR 20240088247; 05.06.2025 KR 20250073787
(71) Applicant: LG Energy Solution, Ltd., Seoul 07335 (KR)
(72) Inventor: CHO, Sung-Min, Daejeon 34122 (KR); BAEK, Jun-Ho, Daejeon 34122 (KR); LEE, Seung-Hun, Daejeon 34122 (KR); HONG, Tae-Rim, Daejeon 34122 (KR)
(74) Representative: Goddar, Heinz J.
(86) International application number: PCT/KR2025/009643
(87) International publication number: WO 2026/010439

(57) **Abstract**

The present disclosure provides a battery including a battery housing having a side wall, a bottom connected to an end portion of the side wall in an axial direction and an open portion present at an opposite end portion of the side wall in the axial direction; an electrode assembly housed in the battery housing; and a lid configured to cover the open portion of the battery housing when mounted on an outer surface of the opposite end portion of the side wall in the axial direction, wherein an edge of an inner surface of the lid and an edge of the opposite end portion of the side wall in the axial direction are joined to form a joint portion, and wherein the joint portion is recessed radially inward.

## Description

### TECHNICAL FIELD

The present disclosure relates to a battery, and a battery pack and a vehicle including the same.

This application is based on and claims priority from Korean Patent Application No. 10-2024-0088247 filed on July 4, 2024 and Korean Patent Application No. 10-2025-0073787 filed on June 5, 2025 with the Korean Intellectual Property Office, the disclosures of which are incorporated herein in their entirety by reference.

### BACKGROUND ART

Secondary batteries are widely used in portable electronic devices as well as electricity-powered transportation devices such as electric vehicles (EVs) or hybrid electric vehicles (HEVs) based on their high applicability to diverse types of products and the outstanding electrical characteristics such as high energy density. Secondary batteries drastically reduce the use of fossil fuels, and do not generate any by-products resulting from the use of energy, so attention is paid to secondary batteries as an alternative energy source with eco-friendliness and high energy efficiency.

The types of secondary batteries now widely used include lithium ion batteries, lithium polymer batteries, nickel-cadmium batteries, nickel-hydrogen batteries or nickel-zinc batteries. The operating voltage of a secondary battery cell generally ranges from about 2.5 V to 4.5 V. When a higher output voltage is required, battery cells are connected in series to form a battery module or a battery pack. The battery module or battery pack may be formed by connecting the cells in parallel depending on the required charge/discharge capacity. Accordingly, the number of batteries included in the battery pack or module and the electrical connection type may be variously set depending on the required voltage and capacity conditions.

The shape of the secondary battery cell is classified into a cylindrical shape, a prismatic shape or a pouch shape, and a cylindrical battery is manufactured by winding an electrode assembly into a jellyroll shape, the electrode assembly including a positive electrode plate and a negative electrode plate with a separator interposed between them, and placing the electrode assembly in a battery housing together with an electrolyte solution. In certain embodiments, the battery housing may have an open side, and a lid may be welded to the corresponding open end portion to seal the battery housing. However, when the area of contact between the battery housing and the lid is insufficient, it may result poor welding and consequential low weld strength, causing electrolyte leaks.

Accordingly, recently, studies are being conducted to use seam welding to connect the lid to the battery housing, instead of beading and crimping. The seam welding may be performed in a direction parallel or perpendicular to the axial direction of the battery housing to join the battery housing to the lid. However, when welding is performed in the direction perpendicular to the axial direction, welding beads may be formed at the welding site, resulting in an uneven outer diameter of the battery housing. The outer diameter deviation may affect the area of contact between the battery and a heat dissipation plate within a battery pack including the battery, potentially leading to reductions in heat dissipation performance and overall performance of a vehicle.

### DISCLOSURE

### Technical Problem

The present disclosure is designed to solve the above-described problems, and therefore the present disclosure is directed to providing a battery for preventing an uneven outer diameter of a battery housing due to welding beads during the manufacture of a cylindrical secondary battery including a seam welding process, thereby ensuring contact stability between the battery and a heat dissipation plate, and preventing reductions in heat dissipation performance of a battery pack and overall performance of a system.

The present disclosure is further directed to minimizing or preventing the influence of welding beads at joint portions between the lid and the battery housing on the outer diameter of the battery housing, thereby improving shape precision of the battery housing, reducing the product defect rate and ensuring stability and reliability of the production process.

The technical problems solved by the present disclosure are not limited to the above-described problems, and these and other problems will be clearly understood by those skilled in the art from the following description.

### Technical Solution

To achieve the above-described objective, according to an aspect of the present disclosure, there is provided a battery of the following embodiments, and a battery pack and a vehicle including the same.

According to a first embodiment, provided is the battery including a battery housing having a side wall, a bottom connected to an end portion of the side wall in an axial direction and an open portion present at an opposite end portion of the side wall in the axial direction; an electrode assembly including a first electrode and a second electrode wound around a winding axis with a separator interposed between the first electrode and the second electrode, the electrode assembly housed in the battery housing such that a tab of the second electrode faces the open portion; and a lid configured to cover the open portion of the battery housing when mounted on an outer surface of the opposite end portion of the side wall in the axial direction, wherein an edge of an inner surface of the lid and an edge of the opposite end portion of the side wall in the axial direction are joined to form a joint portion, and wherein the joint portion is recessed radially inward.

According to a second embodiment, in the first embodiment, the lid and the side wall may be joined by welding, a welding bead may be formed at the joint portion by the welding, and the welding bead may not protrude radially outward from the battery housing.

According to a third embodiment, in any one of the first embodiment or the second embodiment, the joint portion may have a closed loop shape along a circumferential direction.

According to a fourth embodiment, in any one of the first to third embodiments, a radial diameter of the lid may be equal to a radial diameter of the battery housing at the other end portion in the axial direction.

According to a fifth embodiment, in any one of the first to fourth embodiments, the other end portion of the side wall in the axial direction may include a first inclined portion at an outer side in a radial direction and a first flat portion connected to the first inclined portion and perpendicular to the side wall.

According to a sixth embodiment, in the fifth embodiment, the first inclined portion may extend radially outward as it goes axially inward.

According to a seventh embodiment, in any one of the fifth embodiment or the sixth embodiment, an angle (α) between the first inclined portion and the first flat portion may be 100° or more and 170° or less.

According to an eighth embodiment, in any one of the fifth to seventh embodiments, a radial length of the first inclined portion may be smaller than a radial length of the first flat portion.

According to a ninth embodiment, in any one of the first to eighth embodiments, the edge of the inner surface of the lid may include a second inclined portion at an outer side in a radial direction, and a second flat portion connected to the second inclined portion and perpendicular to the axial direction.

According to a tenth embodiment, in the ninth embodiment, the second inclined portion may extend radially outward as it goes axially outward.

According to an eleventh embodiment, in any one of the ninth embodiment or the tenth embodiment, a radial length of the second inclined portion may be smaller than a radial length of the second flat portion.

According to a twelfth embodiment, in any one of the ninth to eleventh embodiments, an angle (β) between the second inclined portion and the second flat portion may be 100° or more and 170° or less.

According to a thirteenth embodiment, in any one of the first to twelfth embodiments, the lid may further include a vent notch.

According to a fourteenth embodiment, in any one of the first to thirteenth embodiments, the battery may further include a second current collector plate connected to the second electrode, and the second current collector plate may be coupled to the battery housing.

According to a fifteenth embodiment, in the fourteenth embodiment, the lid may be axially spaced apart from the second current collector plate at an outer side in a radial direction.

According to a sixteenth embodiment, provided is a battery pack including the battery according to any one of the first to fifteenth embodiments.

According to a seventeenth embodiment, provided is a vehicle including the battery pack according to the sixteenth embodiment.

### Advantageous Effects

The battery according to an embodiment of the present disclosure may prevent an uneven outer diameter of the battery housing due to welding beads in the battery manufacturing process including the seam welding process, thereby ensuring contact stability between the battery and a heat dissipation plate. Accordingly, it may be possible to effectively prevent poor heat dissipation performance of a battery pack.

Furthermore, the present disclosure may minimize or prevent the influence of welding beads at joint portions between the lid and the battery housing on the outer diameter of the battery housing, thereby improving shape precision of the battery housing and reducing the product defect rate.

In addition, because the battery of the present disclosure undergoes side welding through the joint portion formed on the side, damage to the electrode assembly may be minimized.

The effects that can be obtained through the present disclosure are not limited to the above-described effects, and these and other technical effects will be clearly understood by those skilled in the art from the following description.

### BRIEF DESCRIPTION OF THE DRAWINGS

The accompanying drawings illustrate the exemplary embodiments of the present disclosure, and together with the above-described disclosure, serve to provide a better understanding of the technical aspects of the present disclosure, and thus the present disclosure should not be constructed as being limited to the exemplary aspects illustrated in the drawings.
FIG. 1 shows a battery according to an aspect of the present disclosure.
FIG. 2a shows a battery according to an aspect of the present disclosure.
FIG. 2b shows a battery according to an aspect of the present disclosure.
FIG. 3a shows a cross section of a battery according to an aspect of the present disclosure.
FIG. 3b shows a side wall of a battery according to an aspect of the present disclosure.
FIG. 3c shows a lid of a battery according to an aspect of the present disclosure.
FIG. 4 shows a cross section of a battery according to another aspect of the present disclosure.
FIG. 5 shows a cross section of a battery according to still another aspect of the present disclosure.
FIG. 6 shows a cross section of a battery according to an aspect of the present disclosure.
FIG. 7 shows an electrode assembly according to an aspect of the present disclosure.
FIG. 8 shows an electrode assembly according to an aspect of the present disclosure.
FIG. 9 shows a jellyroll-type electrode assembly according to an aspect of the present disclosure.
FIG. 10 shows a jellyroll-type electrode assembly according to an aspect of the present disclosure.
FIG. 11 shows a battery according to an aspect of the present disclosure.
FIG. 12 shows a battery according to an aspect of the present disclosure.
FIG. 13 shows a battery according to an aspect of the present disclosure.
FIG. 14 shows a second current collector plate according to an aspect of the present disclosure.
FIG. 15 shows a second current collector plate according to an aspect of the present disclosure.
FIG. 16 schematically shows a process for placing an electrode assembly in a battery housing according to an aspect of the present disclosure.
FIG. 17 schematically shows a process for welding a first electrode terminal to a first current collector plate according to an aspect of the present disclosure.
FIG. 18 shows a battery pack according to an aspect of the present disclosure.
FIG. 19 shows a battery pack according to an aspect of the present disclosure.

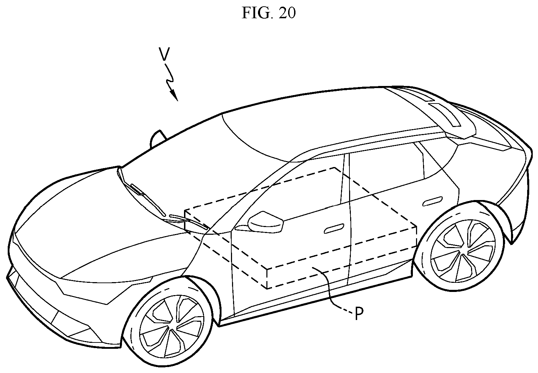

FIG. 20 shows a vehicle according to an aspect of the present disclosure.

### BEST MODE

It should be understood that the terms or words used in the specification and the appended claims should not be construed as being limited to general and dictionary meanings, and rather, should be interpreted based on the meanings and concepts corresponding to the technical aspects of the present disclosure on the basis of the principle that the inventor is allowed to define the terms appropriately for the best explanation.

The terms used herein are used to describe the exemplary embodiments of the present disclosure but not intended to be limiting. The singular forms include the plural forms unless the context clearly indicates otherwise.

### Definition

The term "comprise", "include" or "have" when used in this specification, specifies the presence of the stated elements, but does not preclude the presence or addition of one or more other elements, unless the context clearly indicates otherwise.

Throughout this specification, each element may be singular or plural unless otherwise stated.

Throughout this specification, when an element is referred to as being "on (or under)" or "above (or below)" another element, the element can be positioned in contact with an upper surface (or a lower surface) of the other element, and intervening elements may be present.

Throughout this specification, when an element is referred to as being "connected to" or "coupled to" another element, it should be understood that the elements are directly connected or coupled to each other, but each element may be "connected" or "coupled" through another element, or intervening elements may be present.

Throughout this specification, "A and/or B" refers to either A or B, or both unless otherwise stated, and "C to D" refers to C or more and D or less unless otherwise stated.

Throughout this specification, the term axial direction refers to an axial direction in which a winding axis extends, and the winding axis is an axis around which a jellyroll-type electrode assembly is wound. The term radial direction refers to a direction toward or away from the winding axis. The term circumferential direction refers to a direction that surrounds the axis.

The embodiments described herein and the illustrations shown in the drawings are exemplary embodiments of the present disclosure to describe the technical aspects of the present disclosure but not intended to be limiting, so it should be understood that a variety of other equivalents and modifications could be made thereto at the time the application was filed.

The present disclosure provides a battery.

According to an aspect of the present disclosure, the battery 1 of the present disclosure includes a battery housing 10 having a side wall 11, a bottom 12 connected to one end portion of the side wall 11 in an axial direction and an open portion present at the other end portion of the side wall 11 in the axial direction; an electrode assembly 20 including a first electrode 21 and a second electrode 22 wound around the winding axis with a separator 28 interposed between the first electrode 21 and the second electrode 22, the electrode assembly 20 housed in the battery housing such that a tab of the second electrode 22 faces the open portion; and a lid 40 mounted on an outer surface of the other end portion of the side wall 11 in the axial direction and configured to cover the open portion of the battery housing, wherein an edge of an inner surface of the lid 40 and an edge of the other end portion of the side wall 11 in the axial direction are joined to form a joint portion 16, and the joint portion 16 is recessed radially inward.

A detailed description will be provided below.

The battery 1 of the present disclosure may be, for example, a cylindrical battery 1 having a form factor ratio (defined as a value obtained by dividing the diameter Φ of the cylindrical battery cell by the height H, i.e., a height-to-diameter ratio) of approximately more than 0.4.

Here, the form factor refers to a value representing the diameter and height of the cylindrical battery 1. The cylindrical battery that will be applied to a pressure tester may be, for example, 46110 cell, 48750 cell, 48110 cell, 48800 cell or 46800 cell. In the numerical value representing the form factor, the first two numbers represent the diameter of the cell, the next two numbers represent the height of the cell, and the last number 0 represents that the cell is circular in cross section.

The cylindrical battery that will be applied to the pressure tester may be a cylindrical battery 1 having a roughly cylindrical shape with the diameter of approximately 46 mm, the height of approximately 110 mm, and the form factor ratio of 0.418.

The battery 1 according to another embodiment may be a cylindrical battery cell having a roughly cylindrical shape with the diameter of approximately 48 mm, the height of approximately 75 mm and the form factor ratio of 0.640.

The battery 1 according to another embodiment may be a cylindrical battery cell having a roughly cylindrical shape with the diameter of approximately 48 mm, the height of approximately 110 mm and the form factor ratio of 0.418.

The battery 1 according to another embodiment may be a cylindrical battery cell having a roughly cylindrical shape with the diameter of approximately 48 mm, the height of approximately 80 mm and the form factor ratio of 0.600.

The battery 1 according to another embodiment may be a cylindrical battery cell having a roughly cylindrical shape with the diameter of approximately 46 mm, the height of approximately 80 mm and the form factor ratio of 0.575.

The pressure tester of the present disclosure may be applied to battery cells having the form factor ratio of approximately 0.4 or less, for example, 18650 cell or 21700 cell. The 18650 cell has the diameter of approximately 18 mm, the height of approximately 65 mm and the form factor ratio of 0.277. The 21700 cell has the diameter of approximately 21 mm, the height of approximately 70 mm and the form factor ratio of 0.300.

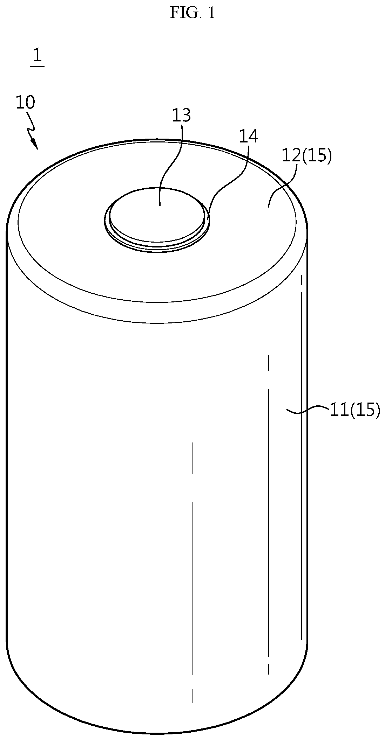

Referring to FIG. 1, the battery housing 10 of the present disclosure has the cylindrical side wall 11, the bottom 12 connected to one end portion of the side wall 11 in the axial direction and the open portion present at the other end portion of the side wall 11 in the axial direction.

The bottom 12 and the side wall 11 may be manufactured by shaping a conductive metal sheet by a deep drawing process, holding the front end portion of the side wall 11 with a blank holder and trimming using a punch.

Alternatively, the bottom 12 and the side wall 11 may be manufactured by shaping a conductive metal sheet by a deep drawing process, supporting the front end portion of the side wall 11 through a jig, and machining perpendicularly to the bottom 12 by using a cutter.

In an embodiment of the present disclosure, the conductive metal sheet may include, for example, aluminum, steel or stainless steel, but is not limited thereto.

The bottom 12 may have a hole at the center, and a first electrode terminal 13 may be fitted into the hole. The first electrode terminal 13 may be riveted to the bottom 12 with a terminal gasket 14 positioned therebetween. The terminal gasket 14 may be positioned between the first electrode terminal 13 and the bottom 12 to seal the inside and outside of the battery housing 10 so as to prevent electrolyte leaks and electrically insulate the first electrode terminal 13 from the bottom 12.

However, the method for connecting the first electrode terminal 13 to the bottom 12 is not limited to thereto. For example, when it comes to a structure for forming a seal between the first electrode terminal 13 and the bottom 12 and electrically insulating the first electrode terminal 13 from the bottom 12, any other fixing method may be used, for example, bolt-nut coupling, glass sealing, or chrome coating & PP-MAH thermal bonding.

The first electrode terminal 13 may have a first polarity, and the battery housing 10 may have a second polarity. Accordingly, the bottom 12 of the battery housing 10 and the side wall 11 connected to the bottom 12 may have a second polarity.

Accordingly, the first electrode terminal 13 and a second electrode terminal 15 may be disposed at one end portion of the battery housing 10 in the axial direction. In this case, a busbar connected to the first electrode terminal 13 and a busbar connected to the second electrode terminal 15 may be located at one end portion of the battery housing 10 in the axial direction.

In an embodiment of the present disclosure, the first electrode terminal 13 may be a positive electrode terminal, and the second electrode terminal 15 may be a negative electrode terminal, and vice versa.

In an embodiment of the present disclosure, the lid 40 may be manufactured by shaping a circular metal sheet by press forming.

In an embodiment of the present disclosure, the lid 40 has substantially a disc shape to close the open portion of the battery housing 10 when mounted on the outer surface of the other end portion in the axial direction.

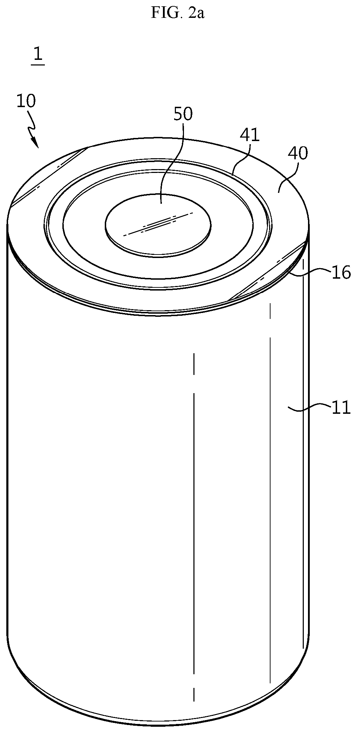

Referring to FIG. 2a, the edge of the inner surface of the lid 40 and the edge of the other end portion of the side wall 11 in the axial direction are joined to form the joint portion 16, and the joint portion 16 is recessed radially inward.

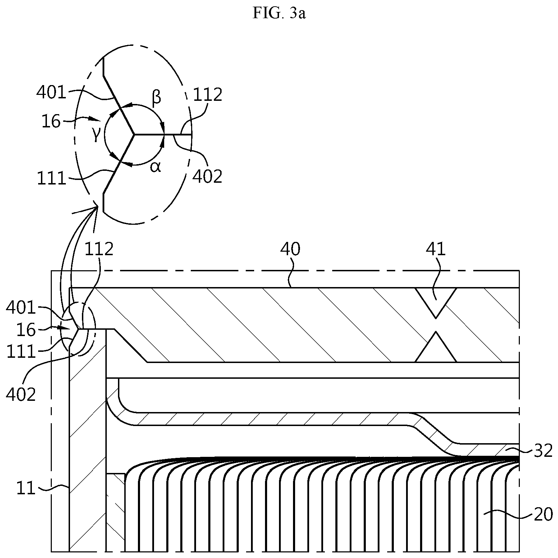

As shown in FIG. 3a, the battery 1 of the present disclosure is recessed radially inward at the contact area of the lid 40 and the side wall 11.

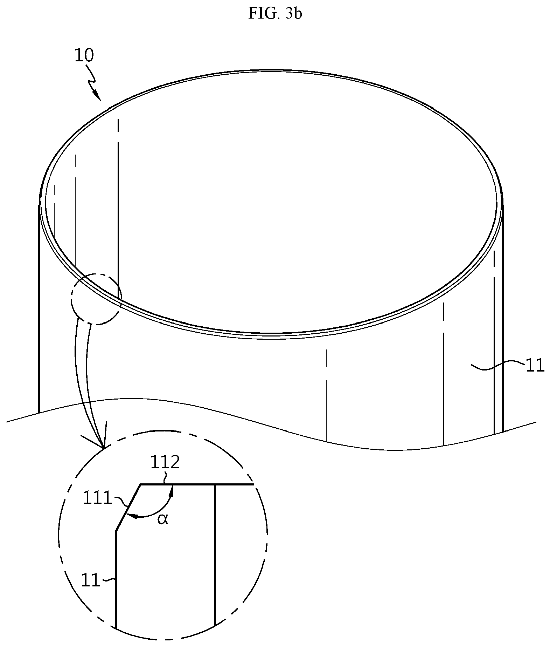

FIG. 3b shows the side wall 11 according to an aspect of the present disclosure.

Referring to FIG. 3b, the other end portion of the side wall 11 in the axial direction may have a first inclined portion 111 on the outer side in the radial direction and a first flat portion 112 connected to the first inclined portion and perpendicular to the side wall.

In an embodiment of the present disclosure, the other end portion of the side wall 11 in the axial direction portion may have the first inclined portion 111 on the outer side in the radial direction and the first flat portion 112 connected to the first inclined portion 111 and perpendicular to the side wall. That is, the first inclined portion 111 may be connected to the outer circumferential surface of the side wall 11, and the first flat portion 112 may be connected to the first inclined portion 111 and connected to the inner circumferential surface of the side wall 11.

In an embodiment of the present disclosure, the first inclined portion 111 may extend radially outward as it goes axially inward. That is, the first inclined portion 111 may have a surface whose outer diameter increases radially outward as it goes axially inward. In this instance, the first inclined portion 111 may be a flat surface or a curved surface.

When the first inclined portion 111 is a flat surface, an angle (α) between the first inclined portion 111 and the first flat surface is not limited to a particular range, but may be, for example, 100° to 170°, 105° to 165°, 110° to 160°, 115° to 155°, 120° to 150°, 125° to 145°, 130° to 140°, or 45°.

In an embodiment of the present disclosure, the first inclined portion 111 may be chamfered, rounded, or inclined to make it oblique by a cutter.

In an embodiment of the present disclosure, the radial length of the first inclined portion 111 may be smaller than the radial length of the first flat portion 112. In this case, it may be possible to ensure a sufficient area of contact between the side wall 11 and the lid 40, thereby achieving high welding strength.

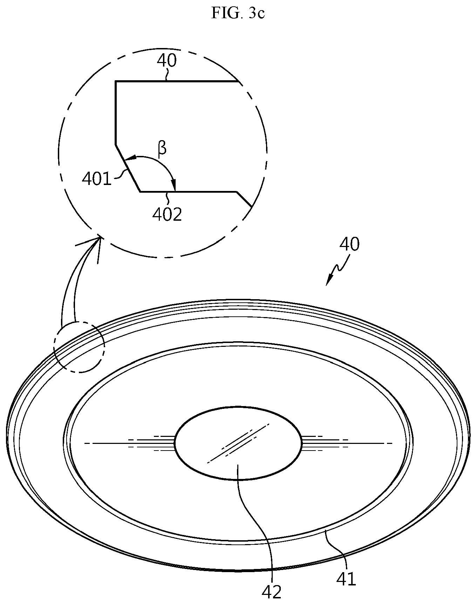

FIG. 3c shows the lid 40 according to an aspect of the present disclosure.

Referring to FIG. 3c, the edge of the inner surface of the lid 40 may have a second inclined portion 401 on the outer side in the radial direction and a second flat portion 402 connected to the second inclined portion 401 and perpendicular to the axial direction.

In an embodiment of the present disclosure, the second inclined portion 401 may extend radially outward as it goes axially outward. That is, the second inclined portion 401 may have a surface whose outer diameter increases radially outward as it goes axially outward. In this instance, the second inclined portion 401 may be a flat surface or a curved surface.

In an embodiment of the present disclosure, when the second inclined portion 401 is a flat surface, an angle (β) between the second inclined portion 401 and the second flat portion 402 is not limited to a particular range, but may be, for example, 100° to 170°, 105° to 165°, 110° to 160°, 115° to 155°, 120° to 150°, 125° to 145°, 130° to 140°, or 45°.

In an embodiment of the present disclosure, the second inclined portion 401 may be chamfered, rounded, or inclined to make it oblique by a cutter.

In an embodiment of the present disclosure, the radial length of the second inclined portion 401 may be smaller than the radial length of the second flat portion 402. In this case, it may be possible to ensure a sufficient area of contact between the side wall 11 and the lid 40, thereby achieving high welding strength.

In an embodiment of the present disclosure, as shown in FIG. 3a, the joint portion 16 may have the first inclined portion 111 of the battery housing 10 and the second inclined portion 401 of the lid 40.

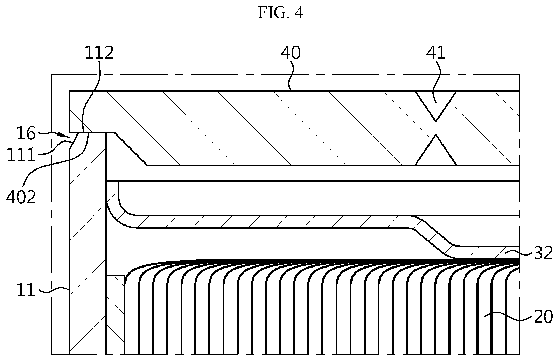

In another embodiment of the present disclosure, as shown in FIG. 4, the joint portion 16 may have the first inclined portion 111 of the battery housing 10, and may not have the second inclined portion 401 of the lid 40.

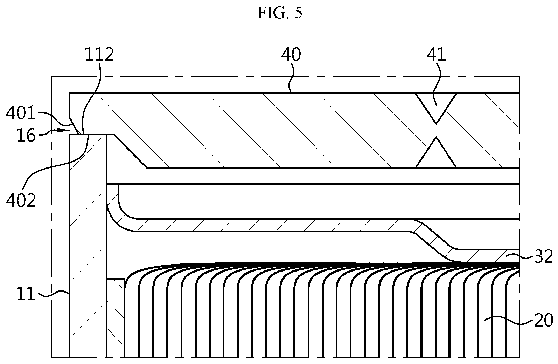

In still another embodiment of the present disclosure, as shown in FIG. 5, the joint portion 16 may not have the first inclined portion 111 of the battery housing 10, and may have the second inclined portion 401 of the lid 40.

In an embodiment of the present disclosure, an angle (γ) between the side wall 11 of the battery housing 10 and the lid 40 at the joint portion 16 may be, for example, 10° to 170°, 20° to 160°, 30° to 150°, 40° to 140°, 50° to 130°, 60° to 120°, 70° to 110°, 80° to 100° or 90°.

In an embodiment of the present disclosure, the joint portion 16 may be formed in a closed loop shape along the circumferential direction as shown in FIG. 2a. That is, the joint portion 16 may be formed continuously between the battery housing 10 and the lid 40. In this case, the mechanical bond strength between the battery housing 10 and the lid 40 may be further improved.

In another embodiment of the present disclosure, the joint portion 16 may be formed discontinuously between the battery housing 10 and the lid 40. In this instance, the joint portion 16 may be formed regularly or irregularly along the circumferential direction.

In an embodiment of the present disclosure, the radial diameter of the lid 40 and the radial diameter of the battery housing 10 at the other end portion in the axial direction may be equal. In this instance, "equal" may include "substantially equal", and the "substantially equal" may represent that the radial diameter of the lid 40 is in a range of 95% to 105% based on the radial diameter 100% of the battery housing 10 at the other end portion in the axial direction. In addition, the radial diameter of the battery housing 10 at the other end portion in the axial direction may be in a range of 95% to 10% based on the radial diameter 100% of the lid 40.

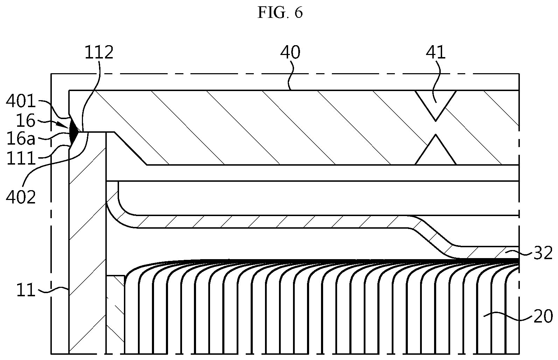

FIG. 6 shows a cross section of the battery including the lid and the side wall welded together according to an aspect of the present disclosure.

Referring to FIG. 6, the lid 40 and the side wall 11 may be joined by welding, and a welding bead 16a may be formed at the joint portion by the welding. The welding bead 16a may not protrude outward beyond the battery housing in the radial direction. That is, the welding bead 16a may not protrude beyond the outer diameter of the lid 40 and/or the outer diameter of the battery housing 10. In other words, the welding bead 16a may be located within the outer diameter of the lid 40 and the outer diameter of the battery housing 10.

In this case, the outer diameter of the battery housing 10 may be kept constant without unevenness, thereby ensuring contact stability between the battery and a heat dissipation plate.

Meanwhile, the joining of the lid 40 and the side wall 11 may be done by resistance welding, ultrasonic welding or laser welding.

In an embodiment of the present disclosure, the lid 40 may further include a vent notch 41.

For example, as shown in FIG. 3a, the vent notch 41 may be formed in an upper surface and/or a lower surface of the lid 40. The vent notch 41 may be ruptured by the internal pressure of high-temperature venting gas to release the venting gas from the battery to the outside when a thermal event occurs in the battery.

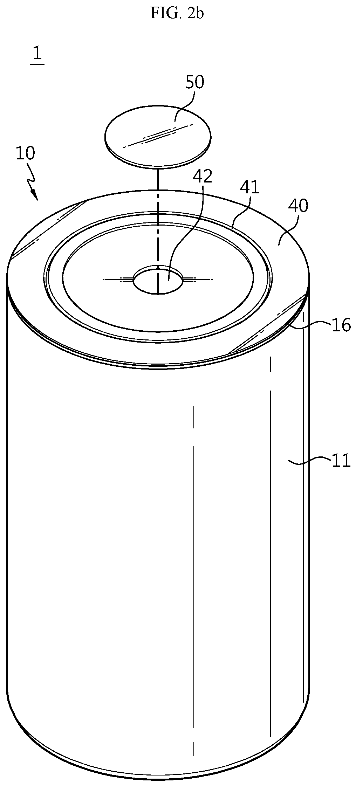

In an embodiment of the present disclosure, the lid 40 of the present disclosure may further include an injection port 42 at the central portion of the lid 40 as shown in FIG. 2b. In a state in which the open end portion of the battery housing 10 is covered with the lid 40, the injection port 42 may be aligned with the hollow core portion of the electrode assembly 20 housed in the battery housing 10.

In an embodiment of the present disclosure, the injection port 42 may be disposed at the inner position relative to the vent notch 41 in the radial direction, and preferably at the central portion.

In an embodiment of the present disclosure, the injection port 42 may be covered and closed by a closure 50 as shown in FIGS. 2a and 2b. The edge portion of the closure 50 and the edge portion of the injection port 42 may be sealed together. The sealing may use seam welding or any other known sealing methods.

In an embodiment of the present disclosure, the closure 50 may have a plug shape, and be formed by deep-drawing a 0.3 mm-thick metal sheet.

Meanwhile, in another embodiment of the present disclosure, the lid 40 may not include the injection port. In this case, in the manufacture of the battery cell, when there is no injection port at the bottom 12 of the battery housing 10, the electrolyte injection process may be performed before covering the battery housing 10 with the lid 40.

However, when the lid 40 further includes the injection port 42, after the lid 40 is pushed into the battery housing 10 and a welded part and a joined part are formed, the electrolyte solution may be injected through the injection port 42. Thus, compared to joining of the lid 40 to the filled battery housing 10, it may be possible to avoid the influence of heat in joining on the electrolyte solution.

In an embodiment of the present disclosure, on the other hand, the injection port 42 at the center of the lid 40 may be a passage through which a device for welding of the first electrode terminal 13 and a first current collector plate 31 of the first electrode 21 enters and exits.

Accordingly, after the lid 40 is joined to the battery housing 10, the first electrode 21 and the first electrode terminal 13 may be joined by putting the welding device into the battery housing 10 through the injection port 42.

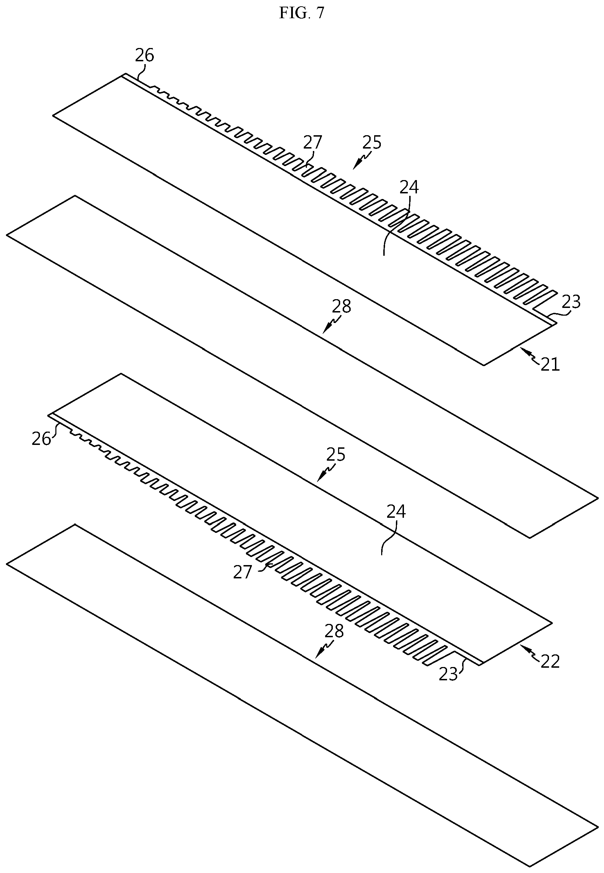

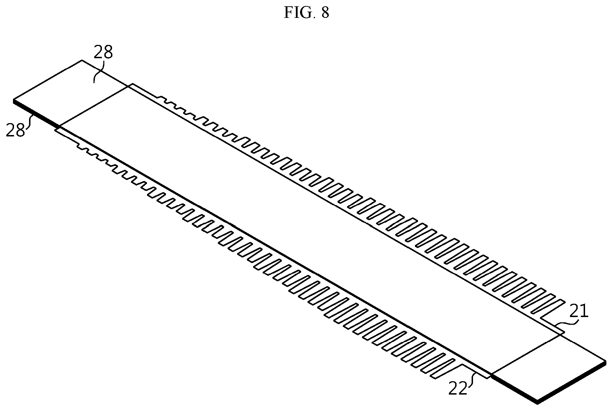

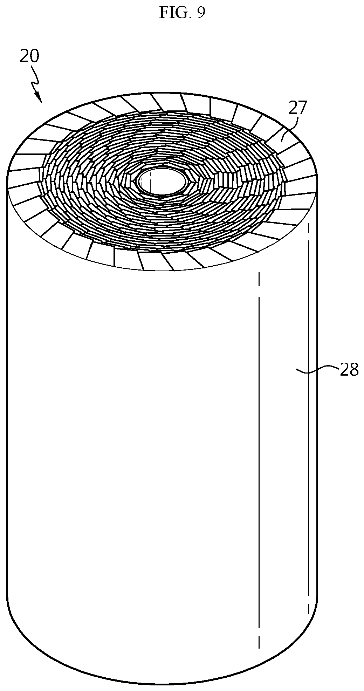

In an embodiment of the present disclosure, the electrode assembly 20 is housed in the battery housing 10. The electrode assembly 20 is manufactured by preparing the first electrode 21, the second electrode 22 and the separator 28 extending in the length direction with a predetermined width as shown in FIG. 7, stacking the first electrode 21, the separator 28, the second electrode 22 and the separator 28 in that order to form a stack as shown in FIG. 8, and winding the stack around the winding axis into a jellyroll shape as shown in FIG. 9.

In an embodiment of the present disclosure, the first electrode 21 may be a positive electrode, and the second electrode 22 may be a negative electrode, and vice versa.

In an embodiment of the present disclosure, the first electrode 21 and the second electrode 22 are made in a sheet shape. The electrode sheet may be fabricated by forming an active material layer 24 on the surface of a metal foil 23 by coating. The electrode sheet may have a coated portion 25 region where the active material layer 24 is present and an uncoated portion 26 region where the active material layer 24 is absent. The positive electrode sheet may have the uncoated portion 26 region at one side in the width direction, and the negative electrode sheet may have the uncoated portion 26 region at the other side in the width direction.

In an embodiment of the present disclosure, the positive electrode may be manufactured by coating a positive electrode composition including a positive electrode active material, a binder, a conductive material and a solvent on a positive current collector.

In an embodiment of the present disclosure, the positive electrode active material may include any positive electrode active material commonly used in positive electrodes of electrochemical devices. For example, the positive electrode active material may include lithium manganese oxide, lithium cobalt oxide, lithium nickel oxide, lithium iron oxide or lithium composite oxide thereof.

In this instance, the positive electrode active material may be included in an amount of 80 to 99 wt%, and preferably 85 to 98 wt% based on the total weight of the solid content of the positive electrode composition. When the amount of the positive electrode active material falls within the aforementioned range, the outstanding capacity characteristics may be exhibited.

The positive current collector is not limited to a particular type and may include any material having conductivity without causing a chemical change in the corresponding battery. The positive current collector may include, for example, stainless steel, aluminum, nickel, titanium, calcined carbon or aluminum or stainless steel treated with carbon, nickel, titanium or silver on the surface.

The binder is used to assist in holding the active material and the conductive material together and binding to the current collector, and may be generally added in an amount of 1 wt% to 30 wt% based on the total solid weight of the positive electrode composition. Examples of the binder may include polyvinylidene fluoride, polyvinyl alcohol, carboxymethyl cellulose (CMC), starch, hydroxypropyl cellulose, regenerated cellulose, polyvinylpyrrolidone, tetrafluoroethylene, polyethylene, polypropylene, ethylenepropylene-diene terpolymer (EPDM), sulfonated EPDM, styrene-butadiene rubber, fluororubber or a variety of copolymers.

The conductive material may be generally added in an amount of 1 wt% to 30 wt% based on the total solid weight of the positive electrode composition.

The conductive material is not limited to a particular type and may include any material having conductivity without causing a chemical change in the corresponding battery. The conductive material may include, for example, graphite; carbon-based materials such as carbon black, acetylene black, Ketjen black, channel black, furnace black, lamp black or thermal black; conductive fibers such as carbon fibers or metal fibers; fluorocarbon; metal powder such as aluminum powder or nickel powder; conductive whiskers such as zinc oxide whiskers or potassium titanate whiskers; conductive metal oxide such as titanium oxide; or conductive materials such as polyphenylene derivatives. Specific examples of commercially available conductive materials include acetylene black from Chevron Chemical Company or Denka Singapore Private Limited, products from Gulf Oil Company, Ketjenblack, EC series (from Armak Company), Vulcan XC-72 (from Cabot Company), and Super P (Timcal).

In addition, the positive electrode active material layer may optionally further include a dispersant if necessary.

The dispersant is not limited to a particular type and may include any dispersant used for the positive electrode. For example, an aqueous dispersant or an organic dispersant may be selectively used according to necessity. Preferably, the dispersant may include any one of a cellulose-based compound, polyalkylene oxide, polyvinyl alcohol, polyvinyl pyrrolidone, polyvinyl acetal, polyvinyl ether, polyvinyl sulfonic acid, polyvinyl chloride (PVC), polyvinylidene fluoride, chitosans, starch, amylose, polyacrylamide, poly-N-isopropylacrylamide, poly-N,N-dimethylacrylamide, polyethyleneimine, polyoxyethylene, poly(2-methoxyethoxyethylene), poly(acrylamide-co-diallyldimethylammonium chloride), acrylonitrile/butadiene/styrene (ABS) polymer, a mixture of acrylonitrile/styrene/acrylate (ASA) ester polymer and propylene carbonate, a styrene/acrylonitrile (SAN) copolymer, methyl methacrylate/acrylonitrile/butadiene/styrene (MABS) polymer, styrene butadiene rubber, nitrile butadiene rubber and fluororubber, or a mixture of two or more thereof. Hydrogenated nitrile butadiene rubber (H-NBR) may be used. When the positive electrode active material layer further includes the dispersant, dispersion of the components of the positive electrode active material layer, particularly the conductive material may be improved, but is not limited thereto.

In addition, the solvent may include any solvent commonly used in the corresponding technical field, and for example, may include any one of dimethylsulfoxide (DMSO), isopropyl alcohol, N-methylpyrrolidone (NMP), acetone or water, or a mixture of two or more thereof. The solvent is used in a sufficient amount for dissolving or dispersing the positive electrode active material, the conductive material and the binder, taking the coating thickness of the slurry and production yield into account, and modifying the viscosity to achieve high thickness uniformity in the subsequent coating process to manufacture the positive electrode.

The negative electrode according to the present disclosure may be manufactured by coating a negative electrode composition including a negative electrode active material, a binder, a conductive material and a solvent on a negative current collector. In addition, the negative electrode composition may optionally further include a dispersant if necessary.

The negative electrode active material may include compounds capable of reversible intercalation and deintercalation of lithium. Preferably, the negative electrode may further include a negative electrode active material exhibiting high-capacity characteristics, for example, a silicon-based negative electrode active material, a carbon-based negative electrode active material, metal composite oxide such as LiₓFe₂O₃ (0≤x≤1), LiₓWO₂ (0≤x≤1), SnₓMe₁₋ₓMe'_{y}O_{z} (Me: Mn, Fe, Pb, Ge; Me': Al, B, P, Si, Group 1, 2, and 3 elements in the periodic table, halogen; 0<x≤1; 1≤y≤3; 1≤z≤8); lithium metal; lithium alloy; tin-based alloy; metal oxide such as SnO, SnO₂, PbO, PbO₂, Pb₂O₃, Pb₃O₄, Sb₂O₃, Sb₂O₄, Sb₂O₅, GeO, GeO₂, Bi₂O₃, Bi₂O₄ and Bi₂O_{5;} conductive polymer such as polyacetylene; Li-Co-Ni-based material; titanium oxide; or lithium titanium oxide. The silicon-based negative electrode active material may include at least one selected from the group consisting of Si, SiOx (0.1 < x < 5), Si-metal alloy, silicon oxide particles doped or chemically bonded with metal such as Mg (SiOx, 0.1 < x < 5) and Si-SiOx alloy (0.1 < x < 5). The carbon-based negative electrode active material may include at least one selected from the group consisting of natural graphite, artificial graphite, amorphous hard carbon, low-crystalline soft carbon, carbon black, acetylene black, Ketjen black, Super P, graphene and fibrous carbon.

The negative current collector is not limited to a particular type and may include any material having high conductivity without causing a chemical change in the battery, and for example, may include copper, stainless steel, aluminum, nickel, titanium, calcined carbon, copper or stainless steel treated with carbon, nickel, titanium or silver on the surface or aluminum-cadmium alloy. In addition, the negative current collector may be generally 3 µm to 500 µm in thickness, and in the same way as the positive current collector, may have the microtextured surface to increase the bond strength of the negative electrode active material. The negative current collector may come in different forms, for example, a film, a sheet, a foil, a net, a porous body, a foam or a non-woven fabric.

The conductive material, the binder, the solvent or the dispersant included in the negative electrode composition are not limited to a particular one and may include any commonly used one in the electrode composition, and for example, may include the conductive material, the binder, the solvent or the dispersant described above in the positive electrode composition.

In an embodiment of the present disclosure, the uncoated portion 26 region may be exposed or protruded from the stack in the width direction as shown in FIGS. 7 and 8. The uncoated portion 26 itself may act as an electrode tab.

In an embodiment of the present disclosure, the uncoated portion 26 may be notched at a predetermined interval to form flag-shaped notching tabs 27.

In an embodiment of the present disclosure, the notching tabs 27 may be in the shape of an equilateral trapezoid as shown in FIGS. 7 and 8. However, the notching tabs 27 may come in different shapes, for example, semicircular, semi-elliptical, triangular, rectangular or parallelogram shapes.

In an embodiment of the present disclosure, the notching tabs 27 may have the equal width and be arranged along the length direction. However, the width of the notching tabs may increase gradually or stepwise from the core to the outer circumstance.

In an embodiment of the present disclosure, the height of the notching tabs 27 may gradually increase outwards in the radial direction from the core. However, the height of the notching tabs 27 may be constant or gradually decrease.

In an embodiment of the present disclosure, there may be no notching tabs 27 at a predetermined part of the inner end portion of the uncoated portion 26 in the radial direction and a predetermined part of the outer end portion in the radial direction. However, notching tabs may not be deleted from the inner end portion of the uncoated portion in the radial direction, and notching tabs may not be deleted from the outer end portion of the uncoated portion in the radial direction.

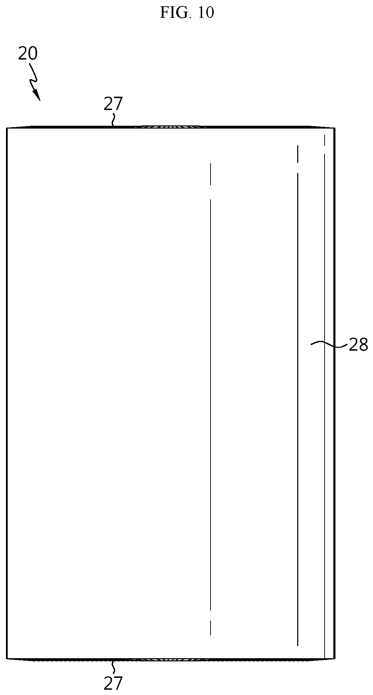

In an embodiment of the present disclosure, the notching tabs 27 of the jellyroll-type electrode assembly 20 may be bent radially and flattened. The notching tabs 27 may be bent radially inward or outward. For example, as shown in FIGS. 9 and 10, the notching tabs 27 may be bent radially inward.

In an embodiment of the present disclosure, the notching tabs 27 may be bent one by one in the process of winding the stack to form the jellyroll-type electrode assembly 20. In contrast, the notching tabs 27 may be bent all at once after winding the stack to form the jellyroll-type electrode assembly.

In an embodiment of the present disclosure, the notching tabs 27 of the first electrode 21 and the notching tabs 27 of the second electrode 22 radially bent and overlapping each other may provide a plane that is substantially perpendicular to the axial direction at two end portions of the electrode assembly 20 in the axial direction, respectively, as shown in FIG. 10.

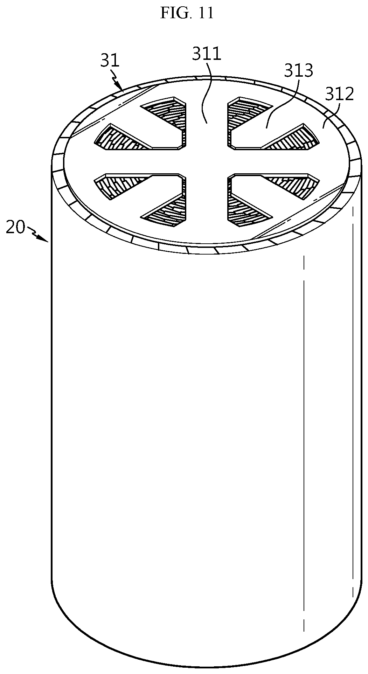

In an embodiment of the present disclosure, the first current collector plate 31 may be joined to the substantially flat surface provided by bending the exposed notching tabs 27 beyond the two end portions of the electrode assembly 20 in the axial direction as shown in FIG. 11.

In an embodiment of the present disclosure, the first current collector plate 31 may be manufactured by punching, trimming, piercing and bending a metal sheet. The first current collector plate 31 may be made of aluminum.

In an embodiment of the present disclosure, referring to FIG. 11, the first current collector plate 31 may include a terminal connection portion 311 extending radially from the central portion, a ring portion 312 connecting the centrifugal edges of the terminal connection portion 311 in the circumferential direction, and an electrode connection portion 313 extending centripetally from the ring portion 312 but not connected to the terminal connection portion 311. The central portion of the terminal connection portion 311 may cover at least a part of the hollow core portion of the electrode assembly 20.

In an embodiment of the present disclosure, before the electrode assembly 20 is placed in the battery housing 10, the electrode connection portion 313 may be joined to the notching tabs 27 of the first electrode 21 of the electrode assembly 20 by laser welding.

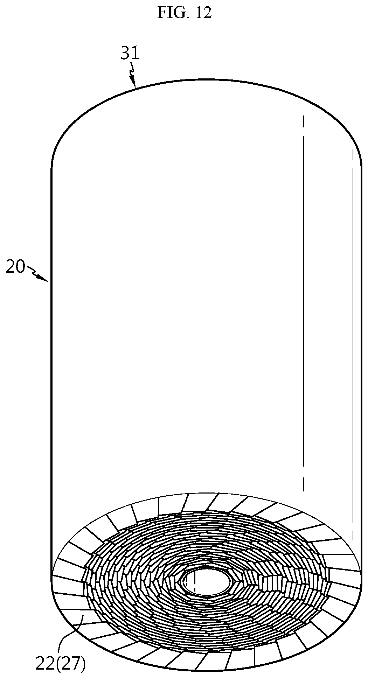

In an embodiment of the present disclosure, referring to FIG. 12, a second current collector plate 32 may not be connected to the notching tabs 27 of the second electrode 22 of the electrode assembly 20. The present disclosure is not limited to the structure in which the current collector plate is not connected to the notching tabs 27 of the second electrode 22.

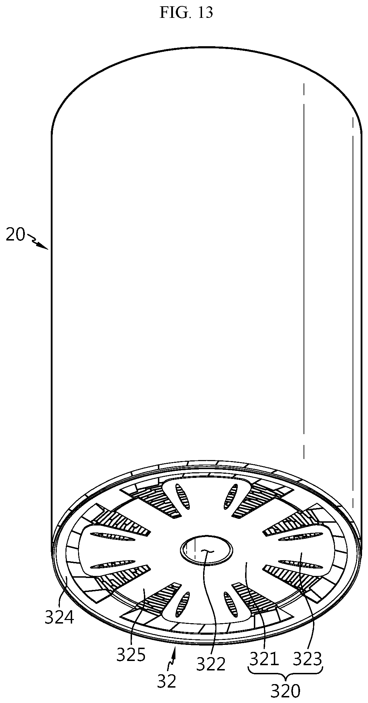

In an embodiment of the present disclosure, referring to FIG. 13, the electrode assembly 20 may further include the second current collector plate 32 at the notching tabs 27 of the second electrode 22 of the electrode assembly 20.

In an embodiment of the present disclosure, the second current collector plate 32 may be made of copper. The second current collector plate 32 may be manufactured by punching, trimming, piercing and bending a metal sheet.

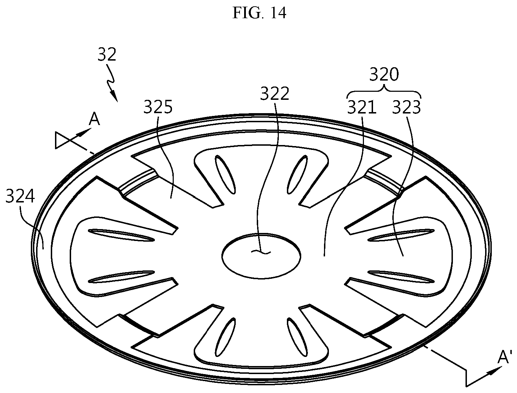

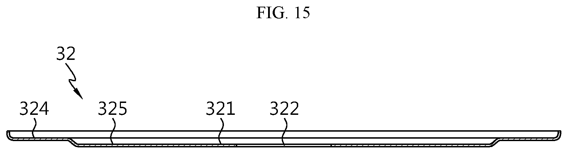

Referring to FIGS. 13 to 15, the second current collector plate 32 may include a body portion 320 connected to the notching tabs 27 of the electrode assembly 20 and an outer ring-shaped can connection portion 324 located at a more centrifugal position than the body portion 320 and disposed around the edge of the second current collector plate 32. The loop-shaped can connection portion 324 may be radially spaced apart from the body portion 320.

The second current collector plate 32 may include a bridge 325 connected to the body portion 320 at the centripetal side and the can connection portion 324 at the centrifugal side.

The body portion 320 may include an inner ring portion 321 defining a hole 322 corresponding to the hollow core portion of the electrode assembly 20 and disposed around the hollow core portion, and an electrode tab connection portion 323 extending radially from the inner ring portion 321. The body portion 320 may be welded and electrically connected to the notching tabs 27 of the electrode assembly 20 by laser irradiation onto the electrode tab connection portion 323.

Before the electrode assembly 20 is placed in the battery housing 10, the electrode tab connection portion 323 may be joined to the notching tabs 27 of the second electrode 22 of the electrode assembly 20 by laser welding. The welding line of the laser may extend radially.

The can connection portion 324 may be electrically connected to the body portion 320 through the bridge 325 extending radially.

The bridge 325 and the electrode tab connection portion 323 may be alternately arranged in the circumferential direction. The bridge 325 may be connected to the inner ring portion 321.

In an embodiment of the present disclosure, referring to FIG. 3a, the second current collector plate 32 may be coupled to the battery housing 20. Specifically, the outer circumferential surface of the can connection portion 324 may be joined to the battery housing 10.

In an embodiment of the present disclosure, referring to FIG. 3a, the lid 40 may be axially spaced apart from the second current collector plate 32 at the outer side in the radial direction. That is, the second current collector plate 32 may not contact the lid 40.

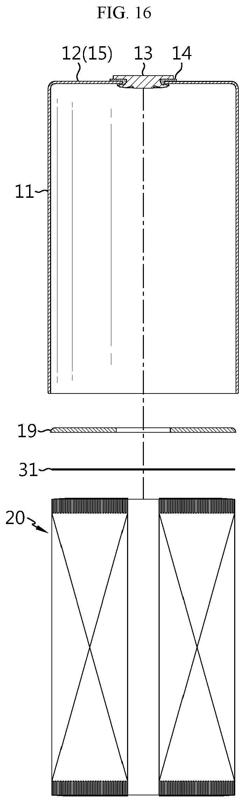

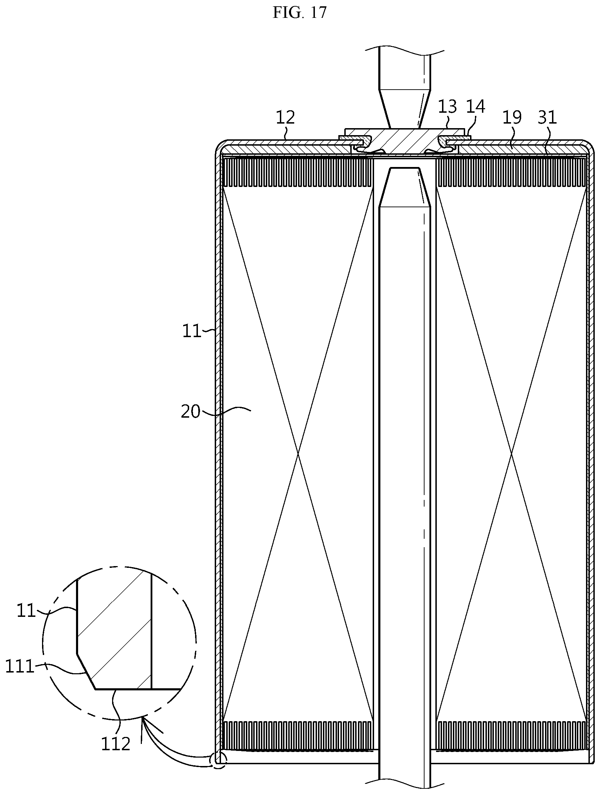

In an embodiment of the present disclosure, as shown in FIGS. 16 and 17, the electrode assembly 20 may be housed in the battery housing 10 in a state in which the first current collector plate 31 is placed in position, facing the bottom 12 of the battery housing 10. In this instance, an insulator 19 may be positioned between the first current collector plate 31 and the bottom 12 of the battery housing 10 to electrically insulate the first current collector plate 31 from the bottom 12.

In an embodiment of the present disclosure, the terminal connection portion 311 of the first current collector plate 31 may be joined to the first electrode terminal 13 secured to the battery housing 10 by resistance welding, ultrasonic welding or laser welding. The welding device used to form the welded part of the first current collector plate 31 and the first electrode terminal 13 may perform welding from the other end portion of the electrode assembly 20 in the axial direction toward the back surface at the center of the terminal connection portion 311 of the first current collector plate 31 through the hollow core portion of the electrode assembly 20 as shown in FIG. 17. Brazing or soldering may be used to join the first current collector plate 31 to the first electrode terminal 13. That is, any other coupling method may be used to electrically connect and hold the first current collector plate 31 and the first electrode terminal 13 together.

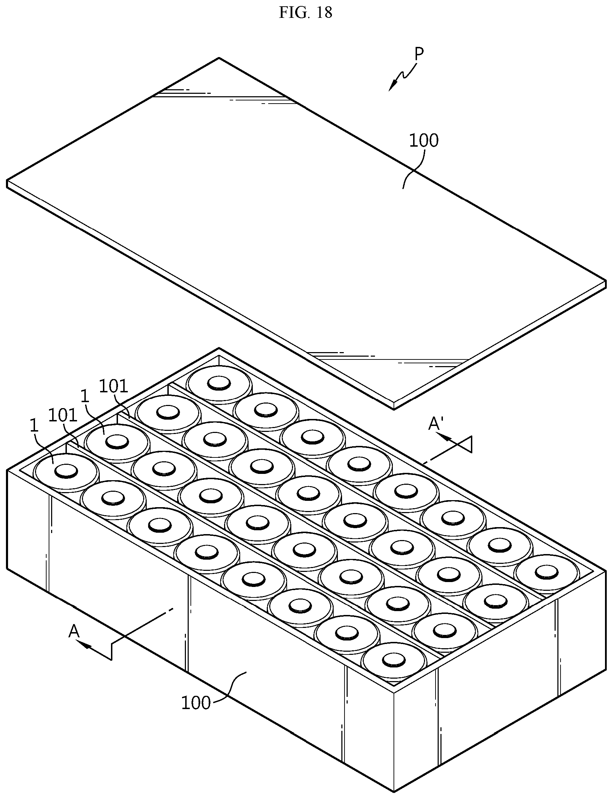

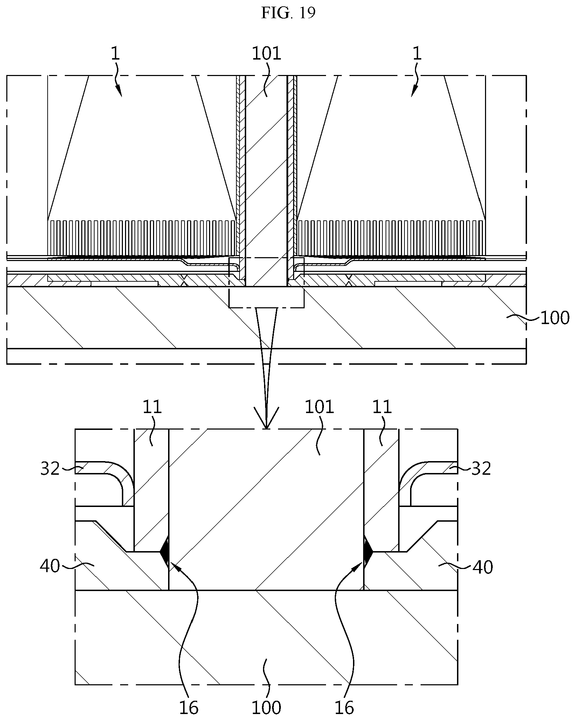

Referring to FIGS. 18 and 19, the battery 1 including the above-described lid may be housed in a housing 100 of a battery pack. The battery pack P may be manufactured using a battery module or an intermediate form of assembly, or the battery pack P may be directly manufactured without a battery module as shown.

Because the battery 1 itself has a large volume, it is easy to manufacture the battery pack P without using an intermediate structure or a battery module. In addition, because the second electrode is connected through the lid, the battery 1 may have lower internal resistance and higher energy density.

Meanwhile, the battery pack P may include a heat dissipation plate 101 on any one side of the battery pack housing 100. In this instance, when the battery 1 has an even outer diameter without the influence of the welding bead 16a, the area of contact between the battery 1 and the heat dissipation plate 101 may be maximized, and heat exchange efficiency of the battery 1 may be increased by the heat dissipation plate 101.

The battery pack P with higher energy density may reduce volume and load of storing the same amount of energy. Therefore, as shown in FIG. 19, when the battery pack P including the battery 1 is mounted in a vehicle V using electricity as an energy source, the vehicle's mileage relative to energy may be further increased.

Although the present disclosure has been hereinabove described with respect to a certain number of embodiments and drawings, the present disclosure is not limited thereto, and persons having ordinary skill in the technical field pertaining to the present disclosure will appreciate that a variety of changes and modifications may be made thereto within the technical scope of the present disclosure and the appended claims and their equivalents. Therefore, it should be understood that the disclosed embodiments are provided by way of illustration but not intended to be limiting. In other words, the true scope of the technical aspects of the present disclosure is set forth in the appended claims, and all differences within the equivalent scope should be construed as being included in the present disclosure.

## Claims

1. A battery comprising:
a battery housing having a side wall, a bottom connected to an end portion of the side wall in an axial direction and an open portion present at an opposite end portion of the side wall in the axial direction;
an electrode assembly including a first electrode and a second electrode wound around a winding axis with a separator interposed between the first electrode and the second electrode, the electrode assembly housed in the battery housing such that a tab of the second electrode faces the open portion; and
a lid configured to cover the open portion of the battery housing when mounted on an outer surface of the opposite end portion of the side wall in the axial direction,
wherein an edge of an inner surface of the lid and an edge of the opposite end portion of the side wall in the axial direction are joined to form a joint portion, and
wherein the joint portion is recessed radially inward.

2. The battery according to claim 1,
wherein the lid and the side wall are joined by welding,
wherein a welding bead is formed at the joint portion by the welding, and
wherein the welding bead does not protrude radially outward from the battery housing.

3. The battery according to claim 1,
wherein the joint portion has a closed loop shape along a circumferential direction.

4. The battery according to claim 1,
wherein a radial diameter of the lid is equal to a radial diameter of the battery housing at the opposite end portion in the axial direction.

5. The battery according to claim 1,
wherein the opposite end portion of the side wall in the axial direction includes a first inclined portion at an outer side in a radial direction and a first flat portion connected to the first inclined portion and perpendicular to the side wall.

6. The battery according to claim 5,
wherein the first inclined portion extends radially outward as it goes axially inward.

7. The battery according to claim 5,
wherein an angle (α) between the first inclined portion and the first flat portion is 100° or more and 170° or less.

8. The battery according to claim 5,
wherein a radial length of the first inclined portion is smaller than a radial length of the first flat portion.

9. The battery according to claim 1,
wherein the edge of the inner surface of the lid includes a second inclined portion at an outer side in a radial direction, and a second flat portion connected to the second inclined portion and perpendicular to the axial direction.

10. The battery according to claim 9,
wherein the second inclined portion extends radially outward as it goes axially outward.

11. The battery according to claim 9,
wherein a radial length of the second inclined portion is smaller than a radial length of the second flat portion.

12. The battery according to claim 9,
wherein an angle (β) between the second inclined portion and the second flat portion is 100° or more and 170° or less.

13. The battery according to claim 1,
wherein the lid further includes a vent notch.

14. The battery according to claim 1, further comprising:
a second current collector plate connected to the second electrode,
wherein the second current collector plate is coupled to the battery housing.

15. The battery according to claim 14,
wherein the lid is axially spaced apart from the second current collector plate at an outer side in a radial direction.

16. A battery pack comprising the battery according to any one of claims 1 to 15.

17. A vehicle comprising the battery pack according to claim 16.
